# EUROPEAN PATENT APPLICATION

(11) **EP 3 211 157 A1**
(43) Date of publication of application: **30.08.2017**
(21) Application number: 17000302.4
(22) Date of filing: 27.02.2017
(51) Int. Cl.: E04H 4/12, E03F 5/06

(54) **DRAINAGE ELEMENT COVER AND MIXTURE FOR PRODUCING THE SAME**

(30) Priority: 25.02.2016 CZ 20160110
(71) Applicant: MVH Gravel s.r.o., 66407 Sivice (CZ)
(72) Inventor: Sekeny, Michal, CZ - 62800 Brno (CZ)
(74) Representative: Kendereski, Dusan

(57) **Abstract**

The invention refers to a drainage element cover with open cavity structure which is water permeable, where the drainage element is for example a draining channel. It further refers to a mixture for producing drainage element covers, comprising aggregate and/or milled glass pulp and binder, and further comprising thixotropic additive. Aggregate is characterized by the size of fraction, most generally, fraction with the size of 4 to 8 mm, 4 to 7 mm or 5 to 8 mm. The binder comprises two-component epoxy sealant or PUR resin. Reinforcements may be embedded into the body of the drainage element cover. To ensure accurate position of the drainage element cover and the same width of the joint, spacers extend from the sidewalls of the drainage element covers.

## Description

### Field of Invention

The invention relates to the field of drainage elements, typically drainage channels, and covers thereof, as well as mixtures for production of such covers.

### Background of the Invention

The principle of draining by means of percolation has been known and used to provide water permeability of surfaces laid on permeable surface, for example, gravel surfaces.

Drainage of surfaces in practice is required, for example, in overflow pools. These pools, entirely recessed into the ground, are adapted so that the water level would reach the upper edge of its walls and thus the ground level. Water then may spill over the pool edge, thus through the overflow edge into overflow channels, one of which flows into the buffer tank. A pump returns water through a filter back into the pool, usually by means of base or wall jets. This system is technologically, spatially and thus also financially more demanding, compared to the pools with elevated edge, however, it has distinct advantages, aesthetic as well as hygienic, as most of the impurities are located on the water surface and when spilling over the overflow edge they get into the buffering tank, being caught in the filter arranged between the tank and the pump.

The overflow channels are typically made of stainless steel or plastic, and may be arranged around the entire pool perimeter or its part, for example, by leaving out the area of pool stairs. In the known solutions the overflow channels are covered with plastic grids or overflow gratings. Usage of the said grids or gratings around the pool perimeter has certain disadvantages. Especially plastic grid is very susceptible to damage, therefore there is a need to replace plastic from which the grid is made with more suitable material, aesthetically as well as functionally. At the same time, it was necessary to find such solution, which would preserve the overflow or spillway function, thus the possibility of water drainage around the pool perimeter into the overflow channel, or more precisely buffer tank. Therefore, the Czech utility model no. 26628 describes a cover for overflow channel, which is made of stainless steel.

Another solution may come in form of various stone monoliths, for example, marble slabs, e.g. with various circular or elongated milled openings of various sizes, or grooves, through which water flows, and which may fulfil the function of drainage element cover. Of course, such openings or grooves pose safety risk in form of a stuck finger while walking on the cover. Moreover, production of such processed stone monoliths is relatively costly.

It is possible to produce drainage element covers from cast parts, e.g. made of concrete, which are made of a mixture of aggregate and/or milled glass pulp and binder. Such parts themselves are impermeable for water, and similarly as in the case of stone monoliths it is necessary to create milled or drilled openings therein.

The aim of this invention is to propose alternative embodiment of the drainage element cover, which would meet the functional (water permeability, slip resistance, abrasion resistance, hygienic safety, strength, resistance to frost, etc.) as well as aesthetic requirements, and which would be suitable for applications in exteriors as well as interiors, and further to propose a mixture for production of such drainage element covers.

### Summary of the Invention

The said aim of the invention is achieved by means of a mixture for producing drainage element covers, comprising aggregate and/or milled glass pulp and binder, characterized in that it further comprises thixotropic additive.

Thixotropic additive is added to the binder in the amount up to 10 weight % per 100 weight % of the binder. The best results in terms of achieving the required properties of the drainage element cover and production costs are achieved with the ratio of 3 to 5 weight % of thixotropic additive per 100 weight % of binder.

Aggregate preferably comprises marble, quartz aggregate, dolomite, serpentine, quartzite, granite, carolith, porphyry, etc., or eventually combinations thereof, or other types of aggregate. For safe barefoot walking, it is preferred that the used aggregate is milled or in form of pebbles. The aggregate may therefore be e.g. river gravel which is already in the form of pebbles or various types of milled aggregate. On the contrary, to meet the requirement of increased adhesion and to obtain slip resistant surface, it is more suitable to use sharp aggregate, e.g. crushed granite. Aggregate and/or milled glass pulp are characterized by the size of fraction. In practice, it means that the larger the pebbles the higher the water permeability, however, the lower the strength of drainage element cover. Drainage element covers with large pebbles may therefore be used even in cases where larger amount of water needs to be drained, e.g. shower baths, and of course, the size of the drainage element cover needs to be designed with respect to the supposed load. Most generally, fraction with the size of 4 to 8 mm, 4 to 7 mm or 5 to 8 mm is used, fraction also with the size of e.g. 6 to 7 mm is used in case more homogeneous structure is required.

It is possible to use various types of binders in the mixture for production of drainage element covers. In a preferred embodiment, the binder comprises two-component epoxy sealant or PUR resin. The amount of binder, the curing time and application conditions, e.g. temperature, depend on the type of the used binder, aggregate, size of the drainage element cover, etc.

Preferably, other additives ensuring the colouration of the drainage element cover and/or creating optical effects, such as metal, plastic or mica glitter, glass beads, colourants, and others, may be added to the mixture for production of drainage element covers. In this manner, modifications in various colours and textures of the drainage element covers may be performed, and additives may be combined with the chosen required filling, i.e. the type and fraction of the aggregate or glass pulp. It is also possible to supply the mixture for production of drainage element covers with UV inhibitor in order to eliminate colour changes caused by long-term exposition of the resulting drainage element covers to sunlight.

The drainage element cover, for example, the cover of the draining channel, made of the above described mixture, is water permeable, and thus allows water percolation similarly as in the case of gravel surface, and at the same time it meets the other above mentioned requirements. Also, it is easy to maintain, cleaning may be performed by means of e.g. water under pressure, without the need for disassembly.

Another subject matter of the present invention is further a drainage element cover consisting of a body, which is made of a mixture for production of drainage element covers described above. Such drainage element cover, contrary to the standard cast ones, e.g. concrete parts, which are made only of a mixture of aggregate and/or milled glass pulp and binder, is characterized by its open cavity structure, which allows water passage through the body of the drainage element cover, because the thixotropic additive makes the whole mixture thicker and does not allow the binder to drain to the bottom of the form when solidifying and to form a water impermeable film therein.

The drainage element cover may be designed so that it entirely covers the drainage element cavity, except the joints, and may thus be of various shapes and sizes, including the straight, corner, curved, tapered and other shapes.

To ensure sufficient strength of the drainage element cover for walking or traveling loads, depending on the particular application, reinforcements may be embedded into the body of the drainage element cover, being arranged in the forms before or during application of the mixture for production of drainage element covers. In a preferred embodiment, at least one reinforcement is arranged in the body of the drainage element cover, being of various shapes and profiles according to the required strength, shapes and dimensions of the body of the drainage element cover, wherein it is necessary to preserve horizontal water permeability of the drainage element cover. The reinforcement may preferably have a shape of transverse or square horizontal grid. The reinforcement is arranged inside the body of the drainage element cover, however, it may also extend to the side edges of the body, thus forming a sandwich structure. In such case, the reinforcement occupies the entire width of the form in production of the drainage element cover. In order to increase strength, the reinforcement may be made of steel, and to ensure higher corrosion resistance the reinforcement may be made of stainless steel material, plastic, or composite.

The drainage element cover is arranged on the supports or brackets of the drainage element. The drainage element is for example drainage channel, gutter and various inlets, applicable e.g. in pools, sanitary equipment, terraces, and the like. The particular drainage element covers are, according to the type of application, installed one after another so that they are loosely laid with a gap between.

To ensure accurate position of the drainage element cover and the same width of the joint, spacers extend from the sidewalls of the drainage element covers. These spacers are preferably made of transparent silicone or plastic.

### Brief Description of the Drawings

The invention will be further described in the following description by means of exemplary embodiments, with references to the attached drawings, in which:
Fig. 1 illustrates a section through the drainage element cover positioned on the supports of the drainage gutter,
Fig. 2 schematically illustrates flow of water through the drainage element cover section,
Fig. 3a illustrates a transverse grid of the reinforcement and Fig. 3b illustrates a square grid of the reinforcement.

### Description of Exemplary Embodiments

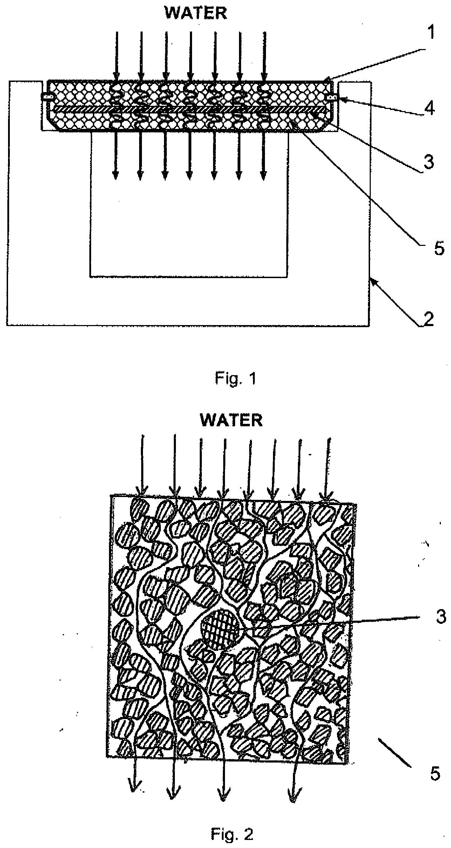

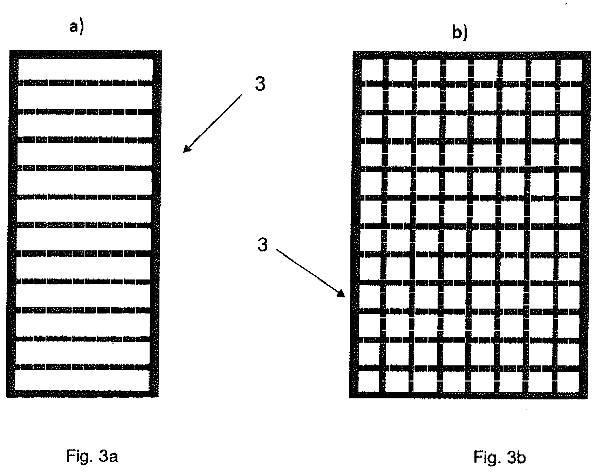

The invention will be further clarified by means of exemplary embodiments, with references to the respective drawings. One exemplary embodiment is the drainage element cover **1**, which is embedded and seated in the drainage element **2** on supports, which in this case is the drainage gutter serving for water overflow from the pool, which is illustrated in the fig. 1. The body of the drainage element cover **1** consists of a mixture **5** of pebbles and cured binder with thixotropic additive. To ensure sufficient strength of the drainage element cover **1,** one stainless steel reinforcement **3** in a shape of horizontal grid is arranged in its body, as it is illustrated in the fig. 3b. Of course, water drained from the surface of the drainage element **1** cover will flow through the grid. The reinforcement **3** is arranged inside the body of the drainage element cover **1**, and thus does not extend to the side edges of the body in this embodiment.

Particular drainage element covers **1** are installed next to each other so that they are loosely laid with a gap between. To ensure accurate position of the drainage element cover **1** and the same width of the gap between the particular drainage element covers **1** and between the drainage element cover **1** and the walls of the drainage element **2**, silicone spacers **4** extend from the side walls of the drainage element cover **1**.

Water draining from the surface of the drainage element cover **1** is performed, contrary to the standard solutions, in which water flows through artificial openings in the drainage element covers **1** or flows around its body, by percolation through the body of the drainage element cover **1** through its open cavity structure.

The drainage element cover **1** is made of a mixture designed for this purpose, which is thoroughly mechanically stirred up and deposited in the prepared forms, in which it solidifies. Alternatively, in order to increase strength, it is possible to insert the reinforcement/s **3** into the forms.

Another exemplary embodiment is a mixture for production of drainage element covers, comprising aggregate and/or milled glass pulp, binder and thixotropic additive.

The mixture for production of drainage element covers is prepared of various types of aggregate. Most commonly used types of aggregate are marble, quartz aggregate, dolomite, serpentine, quartzite, granite, carolith, porphyry, etc. The said aggregate is used in various colours and shades and it is possible to mix this aggregate in various rations so that a pattern/texture is formed. Alternatively, it is possible to use milled glass pulp, which is used e.g. In production of various walking areas, in combination with the aggregate. Various aggregate fractions may be used, most commonly fractions of 4 to 8 mm, 4 to 7 mm or 5 to 8 mm. Aggregate has to be thoroughly dried so that the mixture would not flow, would be clear after being cured, would have the required strength and no degradation due to temperature changes would occur.

There are many binder and thixotropic additive suppliers and the properties of the particular products are very similar. The most common type of binder is two-component epoxy sealant. A possible suitable alternative is e.g. PUR resin.

Other admixtures may be added to the mixture for production of drainage element covers, for example, for colouration and creation of optical effects. It is possible to mention metal, plastic or mica glitter, glass beads or colourants. To eliminate the negative influence of sunlight, it is possible to add UV inhibitors to the mixture for production of drainage element covers.

In case the aggregate would be sealed with large amount of liquid binder, the spaces between the aggregate would be blocked, which would result in water impermeability. Water permeability is determined by a small volume ratio to the aggregate and using the thixotropic additive, thanks to which the binder does not flow down to the base of the form and remains as "stone coating", which only connects the contact areas, resulting in open water-permeable structure. Thixotropic additive in the used mixture together with the binder, e.g. epoxy sealant, affects the viscosity od the mixed mixture, so that the mixture does not flow down the aggregate.

The ratio of binder and aggregate in mixture for production of drainage element covers is based on information provided by binder producer. Thixotropic additive is added to the binder in the amount up to 10 weight % of thixotropic additive per 100 weight % of binder. The best results in terms of obtaining the required properties of the drainage element cover **1** and production costs are achieved with the ratio of 3 to 5 weight % of thixotropic additive per 100 weight % of binder.

In one exemplary embodiment, the mixture for production of drainage element covers is mixed by means of a mechanical mixing device and then divided into the forms of the required shape. The mixture for production of drainage element covers comprises marble aggregate in combination with two-component epoxy sealant and thixotropic additive. 860 g of epoxy resin (component A), 516 g of binder (component B) and 40 to 70 g of thixotropic additive is used per 25 kg of marble aggregate.

The application temperature and curing time may vary in various embodiments, according to the type of the used binder and instructions provided by the binder producer. Recommended curing time depends on the application temperature and it is also provided by the binder producer. In one exemplary embodiment, a binder may be used, with which it is possible to work in the range of limit temperatures of 5 to 35 °C, wherein the producer recommends applying the binder with the temperature range of 10 to 25 °C.

The body of the drainage element cover **1** is made of the above-mentioned mixture for production of drainage element covers using forms in which it is cured. The forms contain material which is antiadhesive to the cured mixture for production of drainage element covers, e.g. polypropylene, preventing sticking of the body of the drainage element cover **1** to the form surface. In case it is required in the particular application, the forms may have their bottom edges tapered, or they may contain removable tapered inserts, which is important, for example, when used together with one of the standardized types of overflow channels for pools in order to create space for the edge joint of plastic. The inserts for creation of tapered edges are removable, it is thus possible to use the form for the drainage element cover **1** with as well as without the inserts.

Holes may be drilled in the side walls of the form, into which the auxiliary inserts, e.g. dowels or aluminium inserts, are inserted, wherein screws are placed into said inserts before producing the drainage element cover **1**, these screws being removed before removing the cured body of the drainage element cover **1** from the form, which results into openings in the body of the drainage element cover **1**, into which silicone, plastic and other spacers **4** may be fixed, in order to define the gap size. The auxiliary inserts as well as spacers **4** are part of the drainage element cover **1.** Placement of the spacers **4** is illustrated in the fig. 1.

Such produced drainage element cover **1** is ready for mounting/installation. Particular drainage element covers **1** are loosely laid one after another in the drainage element **2** with a gap, and the said spacers **4** are used to ensure the position and accurate gap size.

The reinforcement **3**, for example, steel reinforcement **3,** may have various overall shape according to the shape of the body of the drainage element cover **1** and the required strength, and it may further have a profile of, for example, transverse or square grid, depending on the dimensions and shape of the particular drainage element cover **1**, as it illustrated in the figs. 3a and 3b. The reinforcement **3** is not required at all for certain drainage element covers **1,** because sufficient support of the drainage element cover **1** is ensured by means of structure of the drainage element **2** itself, e.g. drainage channel.

Drainage element covers **1** and respective forms may be produced in various shapes, for example, depending on the intended application, they may be straight, corner, curved, tapered at various angles, irregular, and the like. With respect to the wide dimensional variability of the applications, no standard dimensions of the drainage element cover **1** are determined. Dimensions as well as the reinforcement **3** will be always adapted to the particular application, e.g. drainage gutter, and the respective load. Drainage element covers **1** are mostly produced in such sizes, so that the weight of one piece would not exceed 20 kg, enabling manual manipulation with the particular drainage element covers **1**.

### Industrial Applicability

Drainage element cover is applicable wherever it is necessary to ensure drainage of surface, mostly walking areas, exterior as well as interior. The application will be found especially around pools, terraces, various walking and traveling areas near buildings, bathrooms, toilettes, corridors, etc.

### List of reference numbers

(1) Drainage element cover
(2) Drainage element
(3) Reinforcement
(4) Spacer
(5) Mixture of pebbles and cured binder with thixotropic additive

## Claims

1. Mixture for producing drainage element covers, comprising aggregate and/or milled glass pulp and binder **characterized in that** it further comprises thixotropic additive.

2. Mixture for producing drainage element covers according to claim 1 **characterized in that** it further comprises metal or plastic additives, mica glitter, glass beads, dyes or UV inhibitors.

3. Mixture for producing draining element covers according to claim 1 or 2 **characterized in that** the aggregate further comprises marble, quartz aggregate, dolomite, serpentine, quartzite, granite, carolith, porphyry or combinations thereof.

4. Mixture for producing draining element covers according to claim 1 or 2, **characterized in that** the aggregate has a form of pebbles or milled aggregate.

5. Mixture for producing drainage element covers according to any of preceding claims **characterized in that** the size of aggregate and/or milled glass pulp fraction is 4 to 8 mm, 4 to 7 mm, 5 to 8 mm.

6. Mixture for producing drainage element covers according to any of preceding claims **characterized in that** the binder comprises two-component epoxy sealant or PUR resin.

7. Mixture for producing drainage element covers according to any of preceding claims **characterized In that** the thixotropic additive is added in the amount up to 10 weight % of the thixotropic additive per 100 weight % of the binder.

8. Mixture for producing drainage element covers according to claim 7 **characterized in that** the thixotropic additive is added in the amount ranging from 3 to 5 weight % of thixotropic additive per 100 weight % of the binder.

9. Drainage element cover **characterized in that** it consists of a body made of a mixture for production of drainage element covers according to any of preceding claims.

10. Drainage element cover according to claim 9 **characterized in that** auxiliary inserts are arranged in the sidewalls thereof and spacers (4) are seated or bolted in the said inserts.

11. Drainage element cover according to claim 10 **characterized in that** the spacers (4) are made of silicone or plastic.

12. Drainage element cover according to claim 10 or 11 **characterized in that** its body contains a reinforcement (3).

13. Drainage element cover according to claim 12 **characterized in that** the reinforcement (3) is made of steel, stainless steel, plastic or composite.

14. Drainage element cover according to any of claims 12 or 13 **characterized in that** the reinforcement (3) is of transverse or square horizontal grid.
